# EUROPEAN PATENT SPECIFICATION

(11) **EP 1 707 773 B1**
(45) Date of publication and mention of the grant of the patent: **27.02.2008**
(21) Application number: 04747404.4
(22) Date of filing: 12.07.2004
(51) Int. Cl.: F01N 3/02, F02D 35/00

(54) **EXHAUST GAS PURIFIER**
ABGASREINIGUNGSVORRICHTUNGEN
EPURATEUR DES GAZ D'ECHAPPEMENT

(30) Priority: 12.12.2003 JP 2003414623
(43) Date of publication of application: 04.10.2006
(73) Proprietor: Hino Motors, Ltd., Hino-shi, Tokyo 191-8660 (JP)
(72) Inventor: OHYA, Toshiki; c/o Hino Motors Ltd., Hino-shi, Tokyo 1918660 (JP); ENDOU, Hiroshi, c/o Hino Motors, Ltd., Hino-shi, Tokyo 1918660 (JP)
(74) Representative: Walcher, Armin
(86) International application number: PCT/JP2004/009938
(87) International publication number: WO 2005/056988

(56) References cited:
- JP-A- 6 026 375
- JP-A- 8 121 155
- JP-A- 2001 173 429
- JP-A- 2003 097 248

## Description

### Technical Field

The present invention relates to an exhaust emission control device.

### Background Art

Particulates or particulate matter discharged from a diesel engine is mainly constituted by carbonic soot and a soluble organic fraction (SOF) of high-boiling hydrocarbons and contains a trace of sulfate (misty sulfuric acid fraction). In order to suppress such kind of particulates from being discharged into atmosphere, it has been carried out that a particulate filter is incorporated in an exhaust pipe through which the exhaust gas flows.

The particulate filter is a porous honeycomb structure made of ceramics such as cordierite and having lattice-like compartmentalized passages. Alternate ones of the passages have plugged inlets and the remaining passages with unplugged open inlets are plugged at their outlets. Thus, only the exhaust gas passing through the thin porous compartment walls is discharged downstream and the particulates are captured on inner surfaces of the walls.

When such kind of particulate filter is to be mounted especially to a vehicle such as a tractor with short wheel bases and having various accessories laid out in mutually close relationship, it is hard to secure a new mounting space for the particulate filter so as not to interfere with the accessories. It has been therefore under review to store the particulate filter in a muffler and to efficiently arrange the both of them in one and the same mounting space.

Gradually accumulated in the particulate filter is unburned ash which derives from lubricant and cannot be burned out. It is accordingly necessary to take out the particulate filter for direct cleaning such as air cleaning or water washing or for replacement of the filter with a new filter. Thus, the particulate filter must be removably attached to the muffler.

For example, in the following Reference 1 by the same applicant as that of the invention, an exhaust emission control device has been proposed which has a box-shaped muffler with an inner shell fixedly arranged therein. Inserted and fitted into the inner shell is a particulate filter integrally carried by a cartridge shell and unitized into a filter cartridge.
Reference 1: JP 2003-97248A

### Summary of The Invention

### Problems to be Solved by the Invention

However, employment of such construction with the filter cartridge removably fitted into the inner shell which in turn is fixedly arranged in the box-shaped muffler causes the filter cartridge to be stored in proximity of and away from the casing of the muffler to secure a sound-muffling space therearound so that, even if a temperature sensor is arranged to penetrate the casing, a temperature detecting portion of the sensor is still away from the particulate filter, inevitably resulting in detection of temperature of the exhaust in the sound-muffling space as a substitutive value for temperature of the exhaust directly flowing into the particulate filter.

As a result, even in trials of controlling combustion in an engine so as to carry out addition of fuel through post injection and/or elevation of exhaust temperature through post injection for the purpose of positively burning out the particulates captured by the particulate filter, the temperature of the exhaust directly flowing into the particulate filter cannot be accurately detected, resulting in a problem that more minute and more accurate control of combustion in an engine is difficult to conduct.

The following is supplemental explanation on controlling combustion in an engine: unburned fuel may be added through post injection at non-ignition timing after passing of a compression top dead center. Then, the added fuel undergoes oxidation reaction on an oxidation catalyst carried by or arranged separately and upstream of the particulate filter. Reaction heat due to the oxidation reaction elevates temperature of a catalytic floor of the particulate filter, thereby accelerating burnout of the particulates.

Alternatively, the post injection may be added at combustible timing just after main injection. Then, the fuel fed through the post injection is burned at timing for the fuel hardly converted into output so that thermal efficiency of the engine is lowered to increase heating quantity not utilized for motive power among heating quantity from motive power fuel, whereby temperature of the exhaust is elevated to accelerate the burnout of the particulates.

The present invention was made in view of the above and has its object to make it possible to accurately detect a temperature of exhaust directly flowing through a particulate filter stored in a muffler.

### Means or Measure for Solving the Problems

The invention is directed to an exhaust emission control device with a particulate filter stored in a muffler which in turn is incorporated in an exhaust pipe, comprising a recess at a temperature detecting area on a casing of the muffler, said recess being concave up to a position in proximity to the particulate filter in the casing, and a temperature sensor being arranged to penetrate a deepest portion of said recess.

Thus, the temperature sensor is arranged in proximity to the particulate filter in the casing, so that temperature measurement is fulfilled with a temperature detecting portion of the temperature sensor being proximal to a center of an entry- or exit-side end surface of the particulate filter, whereby temperature of the exhaust directly flowing through the particulate filter is accurately detected by the temperature sensor.

Further, it is preferable in the invention that the recess is in the form of a cup and an operation space is secured around the temperature sensor penetrating the recess to allow for operation of a tool for attachment/detachment of said temperature sensor. Then, when the temperature sensor is to be arranged to penetrate the deepest portion of the recess, the operation space secured in the recess can be utilized for reasonable operation of the tool for easy attachment/detachment of the temperature sensor.

### Effects of the Invention

According to an exhaust emission control device of the invention, various excellent effects can be obtained as mentioned below.

(I) The temperature of the exhaust directly flowing through the particulate filter stored in the muffler is accurately detected, so that utilization of such accurately detected temperature makes it possible to conduct various controls such as control of combustion in the engine more minutely and more accurately than is possible conventionally.

(II) The operation space can be secured around the temperature sensor penetrating the recess so as to allow for operation of a tool for attachment/detachment of the temperature sensor, whereby the tool can be reasonably operated to easily conduct attachment/detachment of the temperature sensor to the deepest portion of the recess.

### Brief Description of Drawings

[Fig. 1] A partly cut-out perspective view showing an embodiment of the invention.
[Fig. 2] A vertical sectional view of the muffler shown in Fig. 1.
[Fig. 3] A perspective view showing a recess formed at a temperature detecting area on a muffler.
[Fig. 4] A sectional view looking in the direction of arrows IV in Fig. 2.

### Explanation of the Reference Numerals

- 1: muffler
- 2: casing
- 9: particulate filter
- 14: exhaust pipe
- 15: exhaust gas
- 18: oxidation catalyst
- 21: cup (recess)
- 22: temperature sensor
- 22a: temperature detecting portion
- 23: operation space

### Best Mode for Carrying Out the Invention

An embodiment of the invention will be described in conjunction with the drawings.

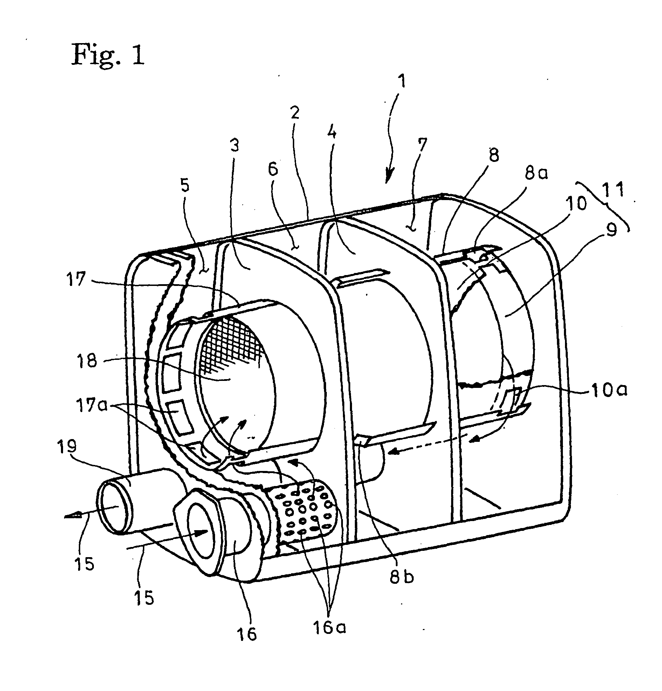

Figs. 1-4 show an embodiment of the invention in which a box-shaped muffler 1 has a casing 2 separated by separators 3 and 4 into three, i.e., first, second and third chambers 5, 6 and 7. A cylindrical inner shell 8 is fixed arranged to penetrate the separator 4 and extend throughout the second and third chambers 6 and 7. This inner shell 8 defines a storage space for a particulate filter 9 within the casing 2 of the muffler 1.

The particulate filter 9 is integrally carried by a cylindrical cartridge shell 10 and unitized into a filter cartridge 11, the filter cartridge 11 being adapted to be fitted into the inner shell 8 by inserting the same through a rear surface on the casing 2 of the muffler 1.

The cartridge shell 10, which carries the particulate filter 9, has a flange 12 on its end outward in a direction of insertion. After the cartridge shell 10 is inserted and stored in the inner shell 8, the flange 12 is bolt-fastened to the rear surface on the casing 2 of the muffler 1 together with an outer edge of a cover 13 which closes an opening of the cartridge shell 10 outward in the direction of insertion.

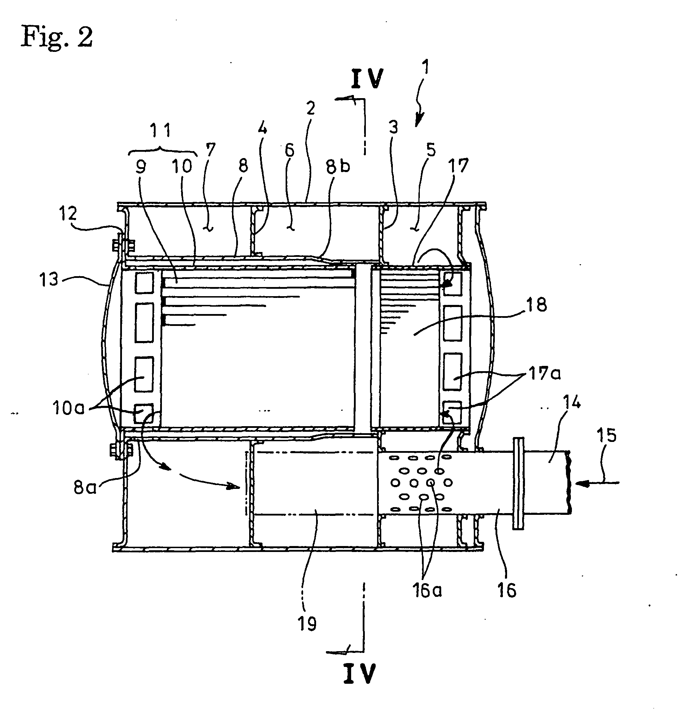

Moreover, an inlet pipe 16 for introduction of exhaust gas 15 from an upstream exhaust pipe 14 (see Fig. 2) is inserted via a front surface on the casing 2 of the muffler 1 up to the first separator 3 for closure of its tip such that the exhaust gas 15 introduced through the inlet pipe 16 is discharged via diffused air holes 16a to the first chamber 5.

In the first chamber 5, a catalyst shell 17 is fixedly arranged to penetrate the separator 3 so as to communicate with the inner shell 8, a straight-flow type oxidation catalyst 18 being stored in the catalyst shell 17 so as to assist burnout of the particulates captured by the particulate filter 9, the exhaust gas 15 in the first chamber 5 being introduced, via slits 17a of the catalyst shell 17, into an end of the oxidation catalyst 18 away from the particulate filter 9.

The exhaust gas 15 having passed through the oxidation catalyst 18 flows into the particulate filter 9 in the inner shell 8. After passing through the particulate filter 9 for capture of the particulates, the exhaust gas is discharged to the third chamber 7 via slits 10a of the cartridge shell 10 in proximity to its end outward in the direction of insertion as well as corresponding slits 8a on the inner shell 8.

An outlet pipe 19 for discharge of the exhaust gas 15 purified by the particulate filter 9 is inserted via the front surface on the casing 2 of the muffler 1 up to the third chamber 7 and in parallel with the inlet pipe 16 and with its tip being opened, so that the exhaust gas 15 discharged to the third chamber 7 is withdrawn via the outlet pipe 19 to a downstream exhaust pipe (not shown).

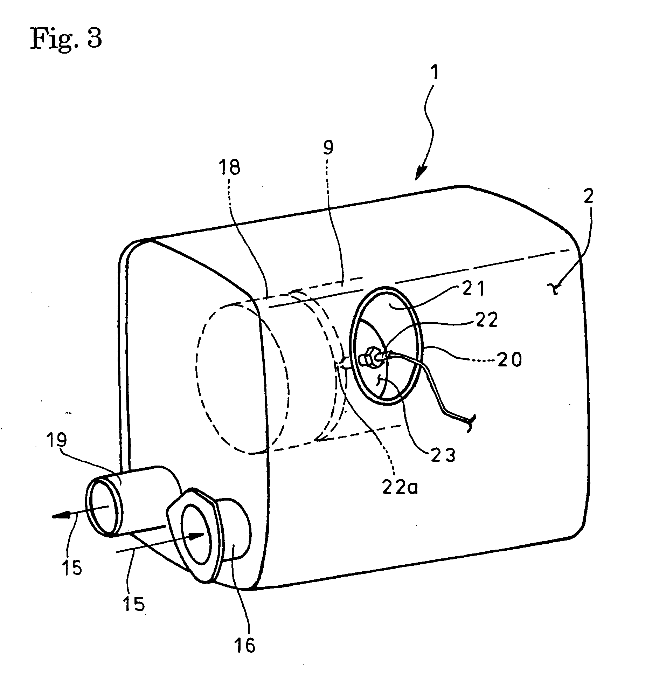

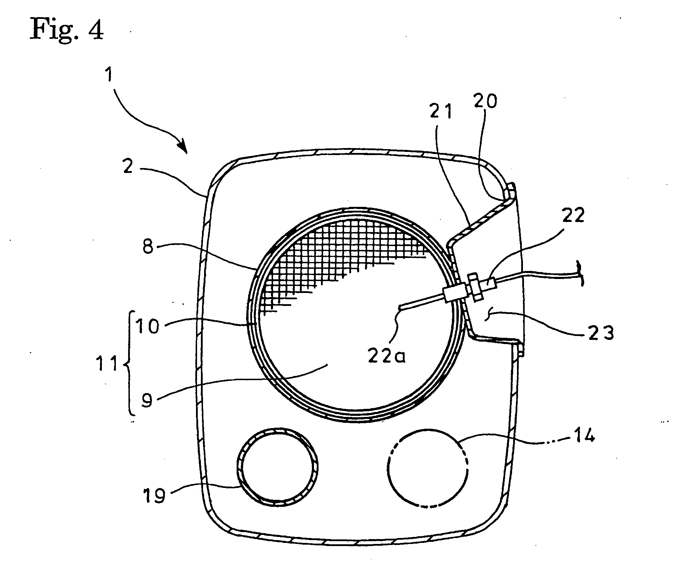

With respect to the exhaust emission control device thus constructed, in the embodiment and as shown in Figs. 3 and 4, a portion of the casing 2 of the muffler 1 at and around a boundary between the oxidation catalyst 18 and the particulate filter 9 provides a temperature detecting area. Fitted to a mounting hole 20 opened at the area is a cup 21 concave inward of the casing 2, so that the recess concave up to a position in proximity to the particulate filter 9 is formed by the cup 21.

Moreover, the temperature sensor 22 is arranged to penetrate a deepest portion of the recess formed by the cup 21, so that a temperature detecting portion 22a of the temperature sensor 22 is inserted between the oxidation catalyst 18 and particulate filter 9 through a cutout (not shown) on the inner shell 8.

An operation space 23 is secured around the penetrating temperature sensor 22 in the cup 21 so as to allow for rotary operation of a tool such as a spanner with a crooked tip for attachment/detachment of the temperature sensor 22 through, for example, a screwing mechanism.

Thus, with the exhaust emission control device of the embodiment constructed as mentioned above, the temperature sensor 22 is arranged in proximity to the particulate filter 9 in the casing 2 so that temperature measurement is fulfilled with the temperature detecting portion 22a of the temperature sensor 22 being proximal to a center of an entry- or exit-side end surface of the particulate filter 9, whereby temperature of the exhaust directly flowing into the particulate filter 9 through the oxidation catalyst 18 is accurately detected by the temperature sensor 22.

Thus, according to the above embodiment, the temperature of the exhaust directly flowing into the particulate filter 9 through the oxidation catalyst 18 stored in the muffler 1 can be accurately detected, so that utilization of such accurately detected temperature makes it possible to conduct control of combustion in the engine more minutely and accurately than is possible conventionally.

Moreover, especially in the embodiment, the operation space 23 is secured around the temperature sensor 22 penetrating so as to allow for operation of a tool for attachment/detachment of the temperature sensor 22, so that the tool can be reasonably operated using such operation space 23, whereby attachment/detachment of the temperature sensor 22 can be easily conducted to the deepest portion of the recess formed by the cup 21.

### Industrial Applicability

It is to be understood that an exhaust emission control device according to the present invention is not limited to the above-mentioned embodiment and that various changes and modifications may be made within the gist of the invention. For example, oxidation catalyst may not be necessarily arranged upstream of and in series with the particulate filter. Measurement may be carried out by the temperature detecting portion of the temperature sensor in proximity to either an entry side or an exit side of the particulate filter. The muffler may not necessarily be box-shaped.

## Claims

1. An exhaust emission control device with a particulate filter (9) stored in a muffler (1) which in turn is incorporated in an exhaust pipe (14), comprising a recess (21) at a temperature detecting area on a casing (2) of the muffler (1), said recess (21) being concave up to a position in proximity to the particulate filter (9) in the casing (2), and a temperature sensor (22) arranged to penetrate a deepest portion of said recess (21).

2. The exhaust emission control device as claimed in claim 1, wherein the recess (21) is in the form of a cup and an operation space is secured around the temperature sensor (22) penetrating the recess (21) to allow for operation of a tool for attachment/detachment of said temperature sensor (22).

## Patentansprüche

1. Abgasemissions-Steuervorrichtung mit einem Partikelfilter (9), der in einem Auspufftopf (1) untergebracht ist, der seinerseits in ein Auspuffrohr (14) eingebaut ist, mit einer Vertiefung (21) in einem Temperaturerfassungsbereich an einem Gehäuse (2) des Auspufftopfs (1), wobei die Vertiefung (21) bis zu einer Position in der Nähe des Partikelfilters (9) in dem Gehäuse (2) konkav ist, und einem Temperatursensor (22), der so beschaffen ist, dass er in einen tiefsten Abschnitt der Vertiefung (21) eindringt.

2. Abgasemissions-Steuervorrichtung nach Anspruch 1, wobei die Vertiefung (21) die Form eines Bechers hat und um den Temperatursensor (22) ein Arbeitsraum fest angebracht ist, der in die Vertiefung (21) eindringt, um die Betätigung eines Werkzeugs zum Befestigen/Lösen des Temperatursensors (22) zuzulassen.

## Revendications

1. Dispositif de contrôle de gaz d'échappement au moyen d'un filtre à particules (9) stocké dans un silencieux d'échappement (1) qui est à son tour intégré dans un tuyau d'échappement (14), comprenant un renfoncement (21) au niveau d'une zone de détection de température sur un boîtier (2) du silencieux d'échappement (1), ledit renfoncement (21) étant concave jusqu'à une position proche du filtre à particules (9) dans le boîtier (2), et un capteur de température (22) disposé de manière à pénétrer dans une partie la plus profonde dudit renfoncement (21).

2. Dispositif de contrôle de gaz d'échappement selon la revendication 1, dans lequel le renfoncement (21) est en forme de coupe et un espace d'actionnement est fixé autour du capteur de température (22) pénétrant dans le renfoncement (21) pour permettre l'actionnement d'un outil pour attacher/détacher ledit capteur de température (22).
